# EUROPÄISCHE PATENTSCHRIFT

(11) **EP 0 660 943 B1**
(45) Veröffentlichungstag und Bekanntmachung des Hinweises auf die Patenterteilung: **20.03.1996**
(21) Anmeldenummer: 93915680.8
(22) Anmeldetag: 02.08.1993
(51) Int. Cl.: G02B 21/24

(54) **MIKROSKOPSTATIVFUSS**
MICROSCOPE STAND FOOT
PIED DE POTENCE DE MICROSCOPE

(30) Priorität: 19.09.1992 DE 4231468
(43) Veröffentlichungstag der Anmeldung: 05.07.1995
(73) Patentinhaber: LEICA MIKROSKOPIE UND SYSTEME GmbH, D-35530 Wetzlar (DE)
(72) Erfinder: GAUL, Norbert, D-35606 Solms-Oberbiel (DE)
(74) Vertreter: Stamer, Harald, Dipl.-Phys.
(86) Internationale Anmeldenummer: DE9300678
(87) Internationale Veröffentlichungsnummer: WO9407171

(56) Entgegenhaltungen:
- EP-A- 0 211 138
- US-A- 5 079 578

## Beschreibung

Die Erfindung betrifft einen Mikroskopstativfuß zur Aufnahme einer Beleuchtungseinrichtung mit optischen Bauelementen sowie Antriebseinheiten für dieselben.

Aus der US-A-5 079 578 ist ein fotografisches Kamerasystem bekannt, bei dem verschiedene Objektive an ein Kameragehäuse über einen Bajonettverschluß angeflanscht werden können. Zur elektrischen Übertragung von Informationen zum und Objektiv und zum Kameragehäuse weist der Bajonettverschluß federnd gelagerte Kontaktstifte auf. Diesen sind am Objektiv entsprechende Kontakte zugeordnet.

Aus der EP -A- 0 211 138 ist ein Mikroskopstativfuß der eingangs genannten Art bekannt. Durch Trennwände in demselben werden einzelne Aufnahmekammern für optische und elektronische Bauelemente gebildet. So sind in der Aufnahmekammer des Mittelteils hintereinanderliegend eine Aperturblende, eine Leuchtfeldblende und ein Umlenkspiegel angeordnet, während die Aufnahmekammern in den Seitenteilen für die elektronischen Bauelemente bzw. für die Antriebseinheiten der Apertur- und Leuchffeldblende vorgesehen sind. Dieser bekannte Mikroskopstativfuß ermöglicht aufgrund seiner staubgeschützten und wärmeableitenden Bauweise weitgehend einen Dauerbetrieb des Mikroskops, der durch eine sonst häufig erforderliche Reinigung der optischen Bauelemente oder durch Fokusveränderungen aufgrund von Wärmeausdehnungen kaum gestört wird. Die Montage der optischen Bauelemente im Mittelteil dieses Mikroskopstativfußes ist jedoch verhältnismäßig umständlich, und auch nachträgliche Einstellarbeiten erweisen sich als schwierig.

Der Erfindung liegt daher die Aufgabe zugrunde, einen Mikroskopstativfuß der eingangs genannten Art so weiterzuentwickeln, daß bei einfacher Montage und Demontage der optischen Bauteile eine Justierung derselben im Stativfuß entfällt.

Gemäß der Erfindung ist diese Aufgabe durch die kennzeichnenden Merkmale des Hauptanspruches gelöst. Vorteilhafte Weiterbildungen der Erfindung sind Gegenstand der Unteransprüche.

Weitere Einzelheiten und Merkmale sind aus der folgenden Beschreibung eines in der Zeichnung schematisch dargestellten Ausführungsbeispiels ersichtlich. Es zeigen
- Fig.1: eine perspektivische Ansicht des erfindungsgemäßen Mikroskopstativfußes,
- Fig.2: eine geschnittene Vorderansicht senkrecht zur optischen Achse,
- Fig.3: eine Unteransicht und
- Fig.4: eine Seitenansicht des erfindungsgemäßen Mikroskopstativfußes im Schnitt längs der optischen Achse.

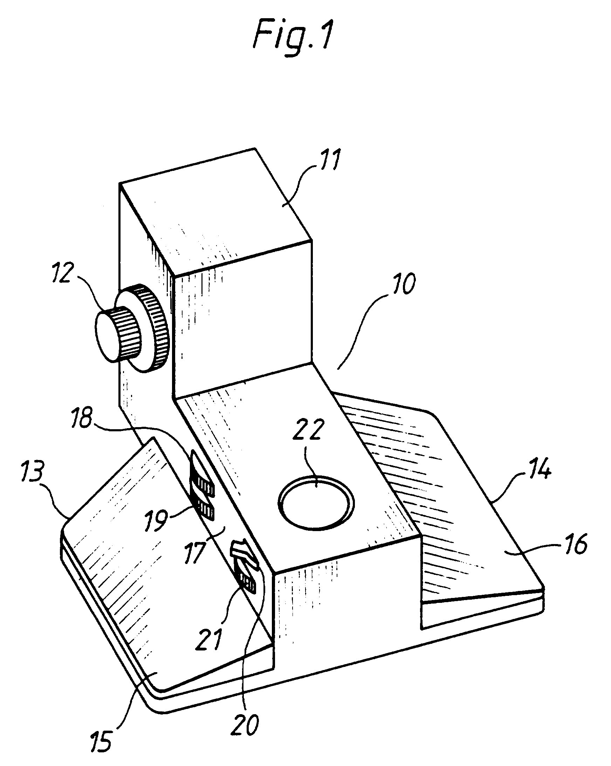

Der in Fig.1 gezeigte Mikroskopstativfuß 10 ist Bestandteil eines rechtwinkligen Stativs, von welchem hier lediglich ein senkrechter Ständer 11 mit einer manuellen Fokussiereinrichtung 12 sowie Seitenteile 13,14 mit gepolsterten Handauflagen 15,16 angedeutet sind. Aus einer Seitenwand 17 des Mikroskopstativfußes 10 stehen in Fingerreichweite von der Fokussiereinrichtung 12 übereinander angeordnete Antriebseinheiten 18,19 in Form von Rändelknöpfen hervor, neben denen weitere Stelleinrichtungen 20,21 vorgesehen sind. Die Oberseite des Mikroskopstativfußes 10 weist eine Lichtdurchtrittsöffnung 22 auf.

Im Stativfuß 10 ist ein Träger 23 befestigt, der im montierten Zustand ein zylindrisches Rohr 24 mittels dessen Umfang über- und untergreifender, halbkreisförmiger Bögen 25 drehfest hält, von denen nur einer gezeigt ist. Beim Einsetzen des Trägers 23 zusammen mit dem Rohr 24 in den Stativfuß 10 wird das Rohr 24 von zwei oberen Paßflächen 26,26 und zwei seitlichen Paßflächen 26 ,26 aufgenommen, die am Stativfuß 10 angeformt sind.

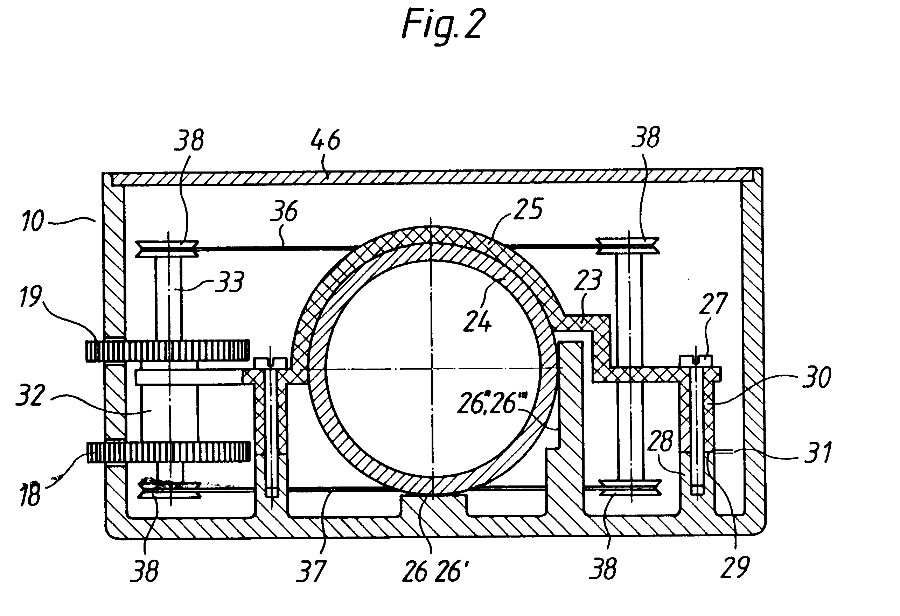

Der Träger 23 wird mittels Schrauben 27 im Stativfuß 10 montiert, der dazu zwei gleichfalls angeformte Sockel 28 mit Planflächen 29 aufweist, auf denen entsprechende Flächen von am Träger 23 angeformten, zylindrischen Vorsprüngen 30 aufliegen. Die Ausbildung der auf der Seite der Paßflächen 26 ,26 angeordneten Sockel 28 und Vorsprünge 30 ist dabei derart getroffen, daß sich beim Auflegen des Trägers 23 ein geringer Luftspalt 31 von etwa 0,5 mm Dicke zwischen den Planflächen 29 der beiden Sockel 28 und den Flächen der Vorsprünge 30 ergibt. Auf diese Weise ist das Rohr 24 beim Verschrauben des aus einem hartelastischen Kunststoff gefertigten Trägers 23 mit dem Stativfuß 10 auf den Paßflächen 26 ,26 unter Spannung festgelegt (Fig.2), sodaß eine Justierung des Rohres 24 und damit der darin montierten Bauteile entfällt.

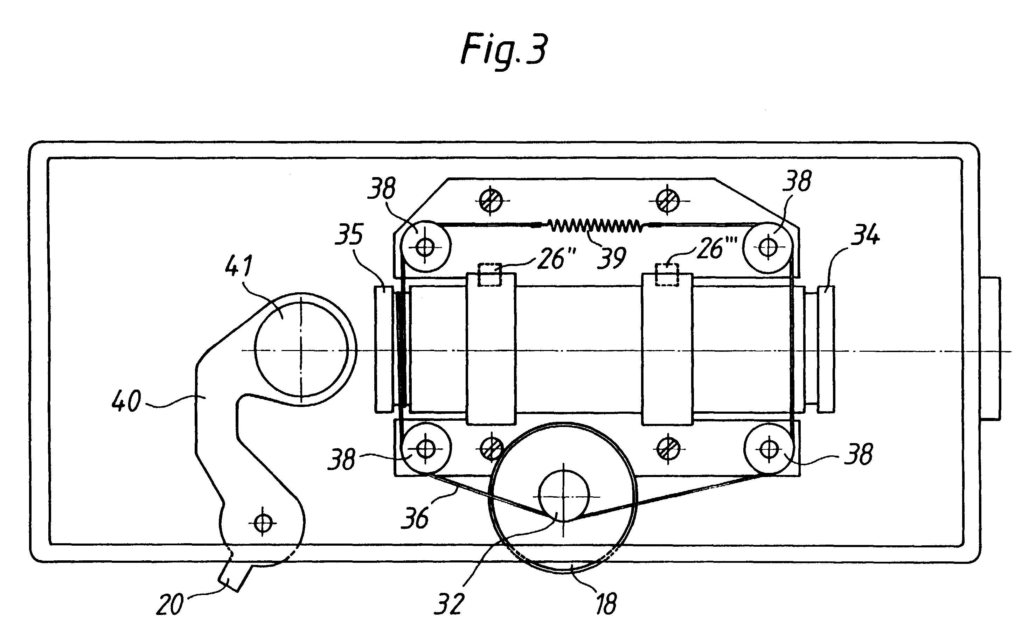

An den Träger 23 ist eine Achsführung 32 für eine Achse 33 angeformt, um welche die übereinanderliegenden Antriebseinheiten 18,19 für eine Apertur- und eine Leuchtfeldblende 34,35 drehbar sind. Als Antriebsmittel zur Steuerung der Blendenöffnungen sind jeweils Seilzüge 36,37 vorgesehen, die in Rollen 38 geführt sind und zum Längenausgleich Zugfedern 39 aufweisen (Fig.3).

Im Stativfuß 10 ist weiterhin ein Halter 40 für ein Graufilter 41 angeordnet, der mittels der Stelleinrichtung 20 in den Beleuchtungsstrahlengang einschwenkbar ist, um ohne Änderung der Farbtemperatur die Helligkeit einer hier nicht gezeigten Lichtquelle zu verringern. Die zusätzliche Stelleinrichtung 21 kann beispielsweise zur Spannungsregelung der Lichtquelle dienen.

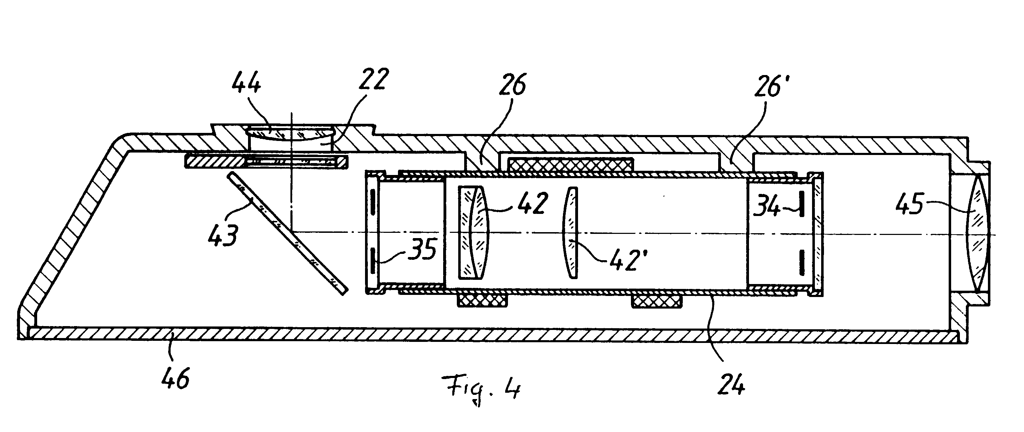

Im in den Stativfuß 10 als vorgefertigte Einheit einsetz- und befestigbaren, vom Träger 23 gehaltenen Rohr 24 sind außer der Aperturund Leuchtfeldblende 34,35 noch optische Bauelemente 42,42 in Form von Linsen montiert, die zusammen mit einem hinter der Leuchtfeldblende 35 außerhalb des Rohres 24 angeordneten Umlenkspiegels 43 sowie der nicht gezeigten Lichtquelle einen wesentlichen Teil der Beleuchtungseinrichtung bilden (Fig.4). Oberhalb des Umlenkspiegels 43 ist als Abdeckung in der Lichtdurchtrittsöffnung 22 eine Plankonvexlinse 44 montiert. Der Stativfuß 10 wird gegen das hier nicht gezeigte Lampenhaus mittels einer Bikonvexlinse 45 abgeschlossen und durch eine Bodenplatte 46 abgedeckt, welche ein bequemes Einsetzen des Rohres 24 samt Träger 23 ermöglicht.

## Patentansprüche

1. Mikroskopstativfuß (10) mit einer Beleuchtungseinrichtung mit optischen Bauelementen (42,42') sowie einer Apertur- und Leuchffeldblende (34, 35) mit Antriebseinheiten (18,19) für die Blenden (34,35), dadurch gekennzeichnet, daß die optischen Bauelemente (42,42') sowie die Apertur- und Leuchffeldblende (34,35) in einem von einem Träger (23) gehaltenen, zylindrischen Rohr (24) montiert sind, daß der Stativfuß (10) Paßflächen (26,26') aufweist, und daß am Träger (23) Befestigungseinrichtungen (27) vorgesehen sind, mit denen das Rohr (24) mit seiner Mantelfläche an die Paßflächen (26,26') angedrückt und gegen diese verspannt wird.

2. Mikroskopstativfuß nach Anspruch 1, dadurch gekennzeichnet, daß die Befestigungseinrichtungen (27) halbkreisförmige Bögen (25) aufweisen, die das Rohr (24) über- und untergreifen und das Rohr (23) drehfest am Träger (23) halten.

3. Mikroskopstativfuß nach Anspruch 1, dadurch gekennzeichnet, daß die Antriebseinheiten (18,19) für die Apertur- und Leuchtfeldblende (34,35) unmittelbar übereinander und in Fingerreichweite von einer Fokussiereinrichtung (12) in einer Seitenwand (17) des Stativfußes (10) angeordnet sind.

4. Mikroskopstativfuß nach Anspruch 1 und 2, dadurch gekennzeichnet, daß am Träger (23) eine Achse (33) für die Antriebseinheiten (18,19) der Apertur- und Leuchtfeldblende (34,35) vorgesehen ist, welche mittels Seilzügen (36,37) steuerbar sind.

5. Mikroskopstativfuß nach einem oder mehreren der vorhergehenden Ansprüche dadurch gekennzeichnet, daß als Werkstoff für den Träger (23) ein hartelastischer Kunststoff verwendet ist.

## Claims

1. Microscope stand foot (10) with an illuminating equipment with optical components (42, 42') as well as an aperture and light field stop (34, 35) with drive units (18, 19) for the light stops (34, 35), characterised thereby, that the optical components (42, 42') as well as the aperture and light field stop (34, 35) are mounted in a cylindrical tube (24) retained by a carrier (23), that the stand foot (10) displays fitting surfaces (26, 26') and that fastening equipments (27), by which the tube (24) is pressed against the fitting surfaces (26, 26') by its shell surface and tightened to these, are provided at the carrier (23).

2. Microscope stand foot according to claim 1, characterised thereby, that the fastening equipments (27) display semicircular bows (25), which engage above and blow the tube (24) and hold the tube (24) secure against rotation at the carrier (23).

3. Microscope stand foot according to claim 1, characterised thereby, that the drive units (18, 19) for the aperture and light field stop (34, 35) are arranged one directly above the other and in finger range from a focussing equipment (12) in a side wall (17) of the stand foot (10).

4. Microscope stand foot according to claim 1 and characterised thereby, that an axle (33) for the drive units (18, 19) of the aperture and light field stop (34, 35), which are controllable by means of cable pulls (36, 37), is provided at the carrier (23).

5. Microscope stand foot according to one or more of the preceding claims, characterised thereby, that a hard elastic synthetic material is used as material for the carrier (23).

## Revendications

1. Pied de potence de microscope (10), avec un dispositif d'éclairage comprenant des composants optiques (42, 42') ainsi que des diaphragmes d'ouverture et de limitation du champ lumineux (34, 35) avec des unités d'entraînement (18, 19) pour des diaphragmes (34, 35), caractérisé en ce que les composants optiques (42, 42') ainsi que les diaphragmes d'ouverture et de limitation du champ lumineux (34, 35) sont montés dans un tube cylindrique (24) maintenu par un support (23), que le pied de potence (10) comprend des surfaces d'ajustage (26, 26'), et en ce que des dispositifs de fixation (27) sont prévus sur le support (23), à l'aide desquels le tube (24) est pressé par sa surface périphérique contre les surfaces d'ajustage (26, 26') et est serré contre celles-ci.

2. Pied de potence de microscope selon la revendication 1, caractérisé en ce que les dispositifs de fixation (27) comprennent des arcs en forme de demi cercle (25), qui viennent en prise au-dessus ou en dessous du tube (24) et maintiennent le tube (23) au support (23), de façon solidaire en rotation.

3. Pied de potence de microscope selon la revendication 1, caractérisé en ce que les dispositifs d'entraînement (18, 19) pour les diaphragmes d'ouverture et de limitation du champ lumineux (34, 35) sont disposés immédiatement l'une sur l'autre et à la portée des doigts d'un dispositif de focalisation (12) dans une paroi latérale (17) du pied de potence (10).

4. Pied de potence de microscope selon la revendication 1 et 2, caractérisé en ce qu'un axe (33) est Prévu au support (23) pour les unités d'entraînement (18, 19) des diaphragmes d'ouverture et de limitation du champ lumineux (34, 35), qui peuvent être commandés à l'aide de commandes par câble (36, 37).

5. Pied de potence de microscope selon l'une ou plusieurs des revendications précédentes, caractérisé en ce qu'une matière plastique dure élastique est utilisée comme matière pour le support (23).
